# EUROPÄISCHE PATENTANMELDUNG

(11) **EP 0 816 003 A2**
(43) Veröffentlichungstag der Anmeldung: **07.01.1998**
(21) Anmeldenummer: 97110323.9
(22) Anmeldetag: 24.06.1997
(51) Int. Cl.: B23K 11/00

(54) **Verfahren zum elektrischen Verbinden eines Kontaktelementes eines Steckverbinders mit einer Anschlussleitung**

(30) Priorität: 01.07.1996 DE 19626413
(71) Anmelder: SIEMENS AKTIENGESELLSCHAFT, 80333 München (DE)
(72) Erfinder: Leidner, Michael, 67466 Lambrecht (DE); Birnbaum, Roland, 73433 Aalen (DE); Witzke, Wilfried, 93053 Regensburg (DE); Heimüller, Hans-Jost, 67373 Dudenhofen (DE)

(57) **Zusammenfassung**

Das Kontaktelement eines Steckverbinders wird flächig über eine Anschlußleitung gelegt. Anschließend werden zwei axial zueinander beabstandete und entgegengesetzt gepolte Elektroden (7, 9) auf die Oberseite des oberen Metalleiters (21) aufgesetzt. Es erfolgt eine Bestromung der beiden Elektroden (7, 9), um die beiden Metalleiter (17, 21) miteinander zu verschweißen oder bei entsprechender Oberflächenbehandlung miteinander zu verlöten.

## Beschreibung

Die Erfindung betrifft ein Verfahren zum elektrischen Verbinden von zwei übereinanderliegenden Metalleitern durch Schweißen oder Löten, wobei einer der Metalleiter ein Kontaktelement eines Steckverbinders und der andere Metalleiter eine mit diesem Kontaktelement zu verbindende Anschlußleitung ist.

Zur Verbindung von zwei Metalleitern ist es allgemein bekannt, diese entweder miteinander zu verschweißen oder zu verlöten. Es sind sowohl unterschiedlichste Schweißverfahren als auch unterschiedlichste Lötverfahren zum Herstellen elektrischer Verbindungen zwischen Metalleitern üblich. Die verschiedenen Schweißverfahren richten sich im wesentlichen nach dem Zweck des Schweißens, der Fertigungsart, der Art des Schweißvorganges und der Wärmequelle. Bei dem sogenannten Widerstandspreßschweißen werden die beiden miteinander zu verbindenden Metalleiter flächig aneinander gelegt und jeweils einer der beiden Metalleiter von einer Elektrode kontaktiert. Die beiden Elektroden sind entgegengesetzt gepolt. Bei entsprechend ausreichender Bestromung der beiden entgegengesetzt gepolten Elektroden tritt infolge Stromdurchgang eine ausreichende Erwärmung der Metalleiter, insbesondere durch den hohen Widerstand an der Berührungsstelle der beiden Metalleiter, ein, so daß nach Erreichen der Schweißtemperatur beide Metalleiter vereinigt werden. Hierbei kann an der Berührungsstelle eine Verflüssigung eintreten. Der Strom wird direkt über die Elektroden oder induktiv berührungslos zugeführt.

Das bekannteste Widerstandspreßschweißen ist das sogenannte Punktschweißen. Beim Punktschweißen müssen die beiden Metalleiter flächig übereinandergelegt und jeweils von oben mit einer Elektrode und von unten mit der anderen Elektrode kontaktiert werden. Damit ist es erforderlich, daß die Verbindungsstelle der beiden Metalleiter von oben und unten frei zugänglich und an diesen Stellen zumindest abisoliert ist, sofern an den Metalleitern Isolierungen vorhanden sind.

Um zwei flächig aufeinanderliegende Metalleiter miteinander zu verlöten, ist es notwendig, die Verbindungsstelle mit einem geeigneten Zulegestoff (Lot, schmelzflüssiges Bindemittel) zu versehen. Die Fügungsflächen werden erwärmt, bis eine oberflächige Legierung mit dem Lot erfolgt. Die verschiedenen Lötverfahren unterscheiden sich durch die Wärmeerzeugung und deren Zuführung sowie die Methode, die Oxydschicht auf den Fügungsflächen mechanisch oder durch Flußmittel zu entfernen. Bekannte Löttechniken sind beispielsweise das Bügellöten, das Schwallöten oder das sogenannte Impulslöten. Auch bei der Verbindung von zwei Metalleitern in herkömmlicher Löttechnik ist es erforderlich, daß die Verbindungsstelle möglichst allseitig frei zugänglich ist.

Um ein Kontaktelement eines Steckverbinders mit einer Anschlußleitung zu verbinden, mußte bisher das Kontaktelement vor dem Einstecken in das Steckverbindergehäuse mit der Anschlußleitung verbunden werden. Dies geschah entweder durch Verklemmen, Verlöten oder dgl.

Der Erfindung liegt die Aufgabe zugrunde, ein Verbindungsverfahren für Kontakte eines Steckverbinders mit Zuleitungen anzugeben, welches den Zugang des Schweiß- oder Lötwerkzeuges lediglich von einer einzigen Seite erlaubt und daher bestens für eine automatisierte Verbindungstechnik geeignet ist.

Diese Aufgabe wird durch ein Verfahren mit folgenden Verfahrensschritten gelöst:
- Auflegen des ersten Metalleiters auf einen Werkstückträger,
- flächiges Auflegen des zweiten Metalleiters auf den ersten Metalleiter entlang ihrer Längsachsen,
- berührendes Aufsetzen von zwei axial zueinander beabstandeten und entgegengesetzt gepolten Elektroden auf die freie Oberfläche des zweiten Metalleiters und
- Bestromung der beiden Elektroden zur Erzeugung einer dauerhaften mechanischen und elektrischen Verbindung der beiden Metalleiter.

Das erfindungsgemäße Verfahren beruht im wesentlichen auf der Anwendung eines Spaltschweißverfahrens bzw. eines Spaltlötverfahrens, bei dem zwei entgegengesetzt gepolte Elektroden beabstandet zueinander parallel angeordnet sind, so daß zwischen diesen ein Luftspalt verbleibt. Werden diese so angeordneten Elektroden auf die freie Oberfläche eines Metalleiters gelegt, der an einer Unterseite flächig auf einem weiteren Metalleiter aufliegt, so kommt es bei ausreichend hoher Bestromung der beiden Elektroden (Schweißpuls) zu einer Erhitzung des den Spalt überbrückenden Leiterstücks. Da dieses Leiterstück erfindungsgemäß aus zwei übereinander gelegten Metalleitern besteht, werden diese im Bereich des Elektrodenspaltes verschweißt bzw. bei entsprechender Oberflächenbehandlung mindestens eines der beiden Metalleiters verlötet.

Im Unterschied zum normalen Widerstandsschweißen, bei dem die Schweißelektroden von zwei gegenüberliegenden Seiten auf die zu verschweißenden Metalleiter drücken müssen, braucht bei dem erfindungsgemäßen Verfahren nur eine Seite der zu verbindenden Metalleiter zugänglich sein.

Das erfindungsgemäße Verfahren ist dazu vorgesehen, die Anschlußteile von Steckverbinderkontakten mit Anschlußleitungen zu verbinden. Ist das Steckverbindergehäuse mindestens teilweise in dem Bereich von einer Seite her zugänglich, in dem die Anschlußteile von in dem Steckverbindergehäuse eingesetzten Kontaktelementen zu liegen kommen, können diese Anschlußteile mit dem erfindungsgemäßen Verfahren in einfacher Weise mit Zuleitungen, zum Beispiel Folienleitungen, die über die Anschlußteile gelegt werden, verschweißt oder verlötet werden.

In einer Weiterbildung der Erfindung ist vorgesehen, daß die beiden Elektroden mit einer Stromstärke bestromt werden, die ausreicht, um eine sichere Verschweißung der beiden übereinander liegenden Metalleiter zu gewährleisten.

In einer anderen Weiterbildung der Erfindung ist zumindest einer der beiden übereinander liegenden Metalleiter mit einem Lötmaterial versehen, vorzugsweise beide Metalleiter, so daß bei Bestromung der beiden Elektroden eine zuverlässige Verlötung der beiden Metalleiter erreicht wird. Diese Weiterbildung bietet im Vergleich zum Verschweißen den entscheidenden Vorteil, daß mit geringeren Stromstärken zur Erzielung der elektrischen Verbindung der beiden Metalleitern gearbeitet werden kann.

Die Elektroden können stabförmig, kreisscheibenförmig oder ringförmig ausgebildet sein. Bei der kreisscheibenförmigen oder ringförmigen Ausbildung der Elektroden kann eine maschinelle Verbindung der beiden elektrischen Metalleiter in einfacher Weise dadurch erreicht werden, daß die beiden Elektroden auf die freie Oberfläche des oberen Metalleiters aufgesetzt und anschließend orthogonal zur Längserstreckung der beiden Metalleitern über diese gerollt werden. Auf diese Weise können eine Vielzahl von beabstandet nebeneinanderliegenden Metalleiterpaaren verschweißt oder verlötet werden. Jedesmal, wenn die beiden Elektroden über einem Metalleiterpaar angekommen sind, erfolgt ein ausreichend großer Strompuls, so daß das Verschweißen oder Verlöten erreicht wird.

Das erfindungsgemäße Verfahren wird nachfolgend im Zusammenhang mit Figuren anhand von Ausführungsbeispielen näher erläutert. Es zeigen:
- Figur 1:: eine schematisierte, perspektivische Ansicht eines Schweißkopfes mit Elektroden zum Spaltschweißen bzw. Spaltlöten von darunterliegenden Metalleitern,
- Figur 2:: eine Seitenansicht der Anordnung von, Fig. 1,
- Figur 3:: eine vergrößerte Detailansicht der Elektroden mit darunterliegenden Metalleitern,
- Figur 4:: einen Folienleiter bzw. Flachleiter,
- Figur 5:: ein erstes Ausführungsbeispiel in Schnittansicht von zwei übereinander angeordneten Metalleitern, und
- Figur 6:: ein zweites Ausführungsbeispiel in Schnittansicht von zwei übereinander angeordneten Metalleiter.

In der nachfolgenden Figurenbeschreibung bezeichnen, sofern nicht anders angegeben, gleiche Bezugszeichen gleiche Teile mit gleicher Bedeutung.

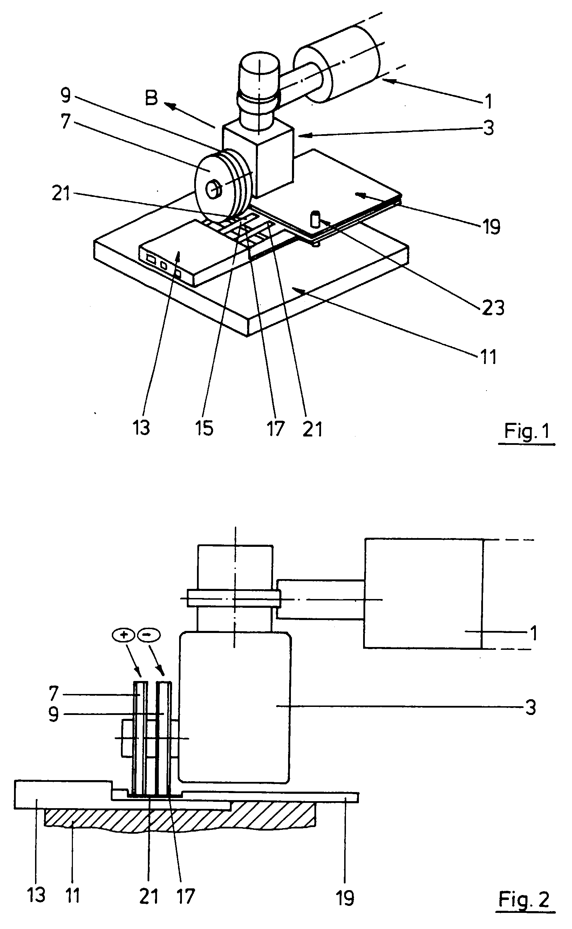

In Fig. 1 ist ein Werktisch 11 ausschnittsweise dargestellt. Über diesem Werktisch ist ein an einem Roboterarm 1 befestigter Schweißkopf 3 angeordnet, der an seinem Ende zwei kreisscheibenförmige Elektroden 7, 9 trägt. Auf dem Werktisch 11 sind paarweise Metalleiter 15, 17, 21 übereinander angeordnet, die elektrisch miteinander verbunden werden sollen.

Im Ausführungsbeispiel von Fig. 1 sind die Metalleiter 15, 17, 21 einerseits Anschlußteile von Kontaktelementen, zum Beispiel Stiftkontakte oder Buchsenkontakte, die in einem Kontaktleistengehäuse 13 bzw. einem Steckverbindergehäuse 13 angeordnet und von oben her frei zugänglich sind. Die aus dem Kontaktleistengehäuse 13 herausragenden Metalleiter 15, 17 sind beabstandet zueinander angeordnet und verlaufen in einer Ebene zueinander parallel. Über diesen von oben her frei zugänglichen Metalleitern 15, 17 des Kontaktleistengehäuses 13 ist jeweils ein Metalleiter 21 von Anschlußleitungen angeordnet. Sofern diese Anschlußleitungen Leitungsdrähte mit Isolierungen sind, sind die Enden dieser Anschlußleitungen abisoliert. Die abisolierten Enden dieser Anschlußleitungen sind jeweils parallel zur Längserstreckung der Metalleiter 15, 17 des Kontaktleistengehäuses 13 ausgerichtet und liegen flächig auf einem der Metalleiter 15, 17 auf, um anschließend verlötet bzw. verschweißt werden zu können.

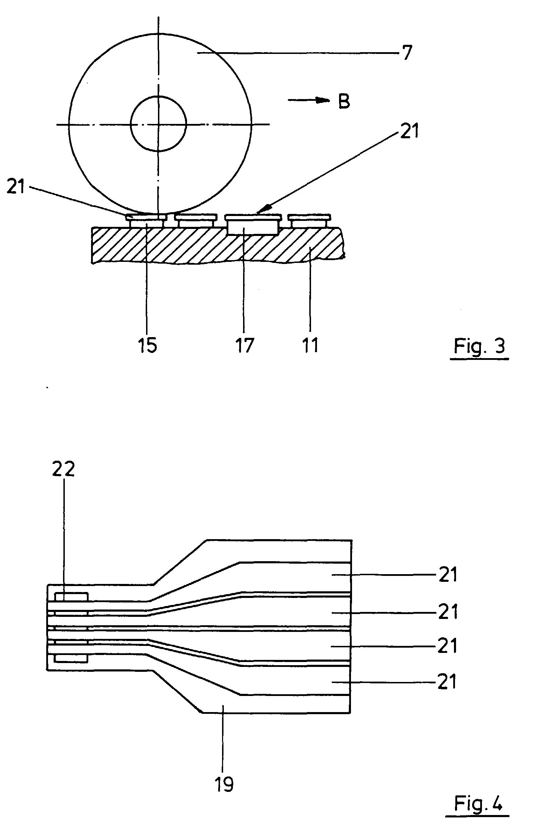

Im Ausführungsbeispiel von Fig. 1 werden anstelle von einzelnen Anschlußdrähten sogenannte Folienleitungen verwendet, welche endseitig parallel zueinander verlaufende, freizugängliche, flache Leitungsbahnen, zum Beispiel aus Kupfer, aufweisen. Solche Folienleitungen sind allgemein bekannt und werden im Zusanmenhang mit Figur 4 näher erläutert. Die elektrisch leitenden und aus Metall bestehenden Leitungsbahnen werden mit ihren freien Enden über oder unter die aus dem Kontaktleistengehäuse 13 herausragenden Metalleiter 15, 17 gelegt. Hierbei berühren sich die Metalleiter 15, 17 des Kontaktleistengehäuses 13 und die aus einer Abdeckung 19 der Folienleitungen heraustretenden Metalleiter 21. Die Metalleiter 15, 17 des Kontaktleistengehäuses 13 und die aus der Abdekkung 19 der Folienleitungen heraustretenden Metalleiter 21 überdecken sich in einem vorgegebenen Bereich, wie insbesondere die Seitenansicht von Fig. 2 deutlich erkennen läßt. Für eine seitenrichtige Montage des Folienleiters kann beispielsweise ein Indexstift 23 vorgesehen werden, der als eindeutige Justierhilfe dient.

Der Roboterarm 1 ist derart justiert, daß beide im vorliegenden Beispiel als kreisscheibenförmig ausgebildeten Elektroden 7, 9 mit ihrer Kreisfläche orthogonal zur Längserstreckung der Metalleiter 15, 17, 21 ausgerichtet sind. Des weiteren befinden sich die beiden Elektroden 5, 7 genau über dem Bereich, in dem sich jeweils zwei Metalleiter 15, 21 bzw. 17, 21 berührend überdecken. Die beiden Elektroden 7, 9 sind zueinander beabstandet und damit einen Spalt bildend am Roboterarm 1 befestigt.

Um die jeweils beiden übereinanderliegenden Metalleiter 15, 21 bzw. 17, 21 miteinander elektrisch zu verbinden, werden die Elektroden 7, 9 auf den oberen Metalleiter 21 des jeweiligen Metalleiterpaares aufgesetzt, so daß die beiden Elektroden 7, 9 den oberen Metalleiter 21 flächig berühren. Da voraussetzungsgemäß der obere Metalleiter 21 flächig auf dem unteren Metalleiter 15 bzw. 17 aufliegt, kann bei Bestromung der beiden Elektroden 7, 9 ein elektrischer Strom von der einen Elektrode 7 zur anderen Elektrode 9 fließen, sofern die beiden Elektroden 7, 9 entgegengesetzt gepolt sind.

Wird an die Elektroden 7, 9 ein Strom ausreichender Stromstärke angelegt, verschweißen die beiden übereinanderliegenden Metalleiter 15, 21 bzw. 17, 21 dauerhaft.

Es liegt im Rahmen der vorliegenden Erfindung, mindestens einen der beiden übereinanderliegenden Metalleiter 15, 21 bzw. 17, 21 mit einem geeigneten Lötmaterial zu versehen, so daß beim Aufsetzen der beiden Elektroden 7, 9 und anschließendem Stromdurchgang durch die Metalleiter 15, 21 bzw. 17, 21 ein Schmelzen des Lötmaterials erfolgt und eine Verlötung zwischen den beiden Metalleitern 15, 21 bzw. 17, 21 erreicht wird. Vorzugsweise werden beide übereinanderliegenden Metalleiter 15, 21 bzw. 17, 21 mit einer geeigneten Lötschicht versehen. Das Verlöten der beiden übereinanderliegenden Metalleiter 15, 21 bzw. 17, 21 hat den Vorteil, daß mit geringeren Stromstärken gearbeitet werden kann.

Bei Verwendung von kreisscheibenförmigen Elektroden 7, 9 oder ringförmigen Elektroden können eine Vielzahl von nebeneinanderliegenden Metalleiterpaaren automatisiert dadurch miteinander elektrisch verbunden werden, daß die Elektroden 7, 9 orthogonal zur Längserstreckung über die Metalleiterpaare gerollt werden. In Fig. 1 ist die Bewegungsrichtung des Schweißkopfes 3 und damit der Elektroden 7, 9 durch den Pfeil B verdeutlich.

Fig. 3 zeigt diese Bewegungsrichtung B ebenfalls, wobei die Elektrode 7 in stirnseitiger Ansicht und die übereinanderliegenden Paare von Metalleitern 15, 21 bzw. 17, 21 in Schnittdarstellung gezeigt sind. Jedesmal, wenn die Elektroden 7, 9 über einem Metalleiterpaar angekommen sind, erfolgt erfindungsgemäß ein ausreichend hoher Stromimpuls, um die Metalleiterpaare miteinander zu verschweißen bzw. zu verlöten.

Obwohl im Zusammenhang mit den Figuren 1, 2 und 3 ausschließlich Elektroden 7, 9 mit kreisscheibenförmiger Form beschrieben wurden, ist es ohne weiteres möglich, ringförmige Elektroden zu verwenden. Darüber hinaus können auch stabförmige Elektroden eingesetzt werden. Allerdings muß bei der Verwendung von stabförmigen Elektroden, die ebenfalls beabstandet zueinander angeordnet sein müssen, durch eine geeignete Steuerung dafür gesorgt werden, daß das Elektrodenpaar von einem Metalleiterpaar zum anderen Metalleiterpaar bewegt und dort aufgesetzt wird.

Wie das im Zusammenhang mit den Figuren 1 bis 3 erläuterte Ausführungsbeispiel deutlich zeigt, ist es für die Anwendung des erfindungsgemäßen Verfahrens lediglich notwendig, daß die übereinanderliegenden Metalleiterpaare von einer Seite her frei zugänglich sind. Der Schweißkopf 3 wird von dieser frei zugänglichen Seite auf die Metalleiterpaare aufgesetzt und sorgt durch entsprechende Bestromung für die dauerhafte elektrische Verbindung der beiden übereinanderliegenden Metalleiter.

In Figur 4 ist ein Ausschnitt einer als Flachleiter ausgebildeten Anschlußleitung dargestellt. Der Flachleiter weist im vorliegenden Ausführungsbeispiel vier nebeneinander verlaufende und auf einem geeigneten Träger 19 angeordnete, metallische Leiterbahnen 21 auf, die sich jeweils zur Anschlußseite hin verengen. Die Anschlußseite des Flachleiters ist in Figur 4 links angeordnet. An dieser Anschlußseite wird der Flachleiter mit den Kontaktelementen eines Steckverbinders verbunden. Als Träger 19 kann z.B. eine Kunststoffabdeckung eingesetzt werden, in welche die Leiterbahnen 21 eingebettet sind. Die einzelnen Leiterbahnen 21 bestehen z.B aus Kupfer oder einem anderen elektrisch leitenden Material. Der gesamte Flachleiter ist flexibel gestaltet.

Wie in Figur 4 dargestellt, weist der Flachleiter an seiner Anschlußseite eine fensterartige Ausnehmung 22 auf, in welcher die einzelnen Leiterbahnen 21 frei liegen, also nicht vom Träger 19 verdeckt sind. Die Ausnehmung 22 kann so gestaltet sein, daß die Leiterbahnen 21 oben und unten oder nur oben mit ihrer elektrisch leitenden Schicht freigelegt sind. Dies ist davon abhängig, ob beim Schweißvorgang die Leiterbahnen 21 ober- oder unterhalb der Metalleiter liegen, mit denen ein elektrischer Kontakt hergestellt werden soll.

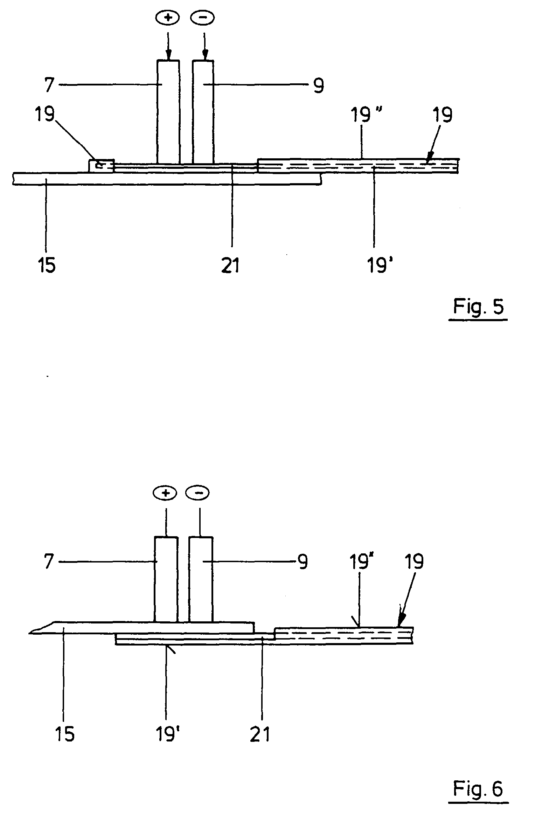

In Figur 5 ist eine teilweise Schnittansicht dargestellt, bei der die Leiterbahnen 21 des Flachleiters auf dem Metalleiter 15 eines Steckverbinders liegen. Damit die Elektrodem 7, 9 einen Stromfluß erzeugen können, müssen die Leiterbahnen 21 oben und unten abisoliert sein, d.h. die Kunststoffabdeckung bzw. der Träger 19 muß hier entfernt sein. Dies erfolgt entsprechend Figur 4 durch eine fensterartige Abtragung des Trägers 19. In der Schnittansicht von Figur 5 ist die über den Leiterbahnen 21 angeordnete Isolierschicht mit 19' und die unter den Leiterbahnen 21 angebrachte Isolierschicht mit 19'' bezeichnet. Damit die Leiterbahnen 21 innerhalb der Ausnehmung 22 sicher gehalten werden, enden die distalen Enden der Leiterbahnen 21 im Träger 19. Zum Verschweißen werden die Elektroden 7,9 auf die Leiterbahnen 21 gedrückt, so daß diese mit den darunterliegenden Metalleitern 15 in Kontakt kommen.

Figur 6 zeigt eine Schnittansicht, bei der die Leiterbahnen 21 des Flachleiters unter den Metalleitern 15 angeordnet sind. In diesm Fall muß natürlich nur die obere Isolierung 19' vom Flachleiter entfernt werden.

Das erfindungsgemäße Verfahren zeichnet sich durch eine sichere Betriebsweise aus. Durch das nur einseitig notwendige Aufsetzen der Elektroden ergibt sich ein sehr einfacher Aufbau der gesamten Schweiß- bzw. Lötvorrichtung. Neben einer einfachen Instandhaltung zeichnet sich die erfindungsgemäße Vorrichtung zur Durchführung des Schweiß- bzw. Lötverfahrens auch durch eine verhältnismäßig hohe Elektrodenstandzeit auf. Darüber hinaus brauchen die Elektroden, anders wie beim Elektrodenpreßschweißen, nur mit verhältnismäßig geringen Kräften auf den oberen Metalleiter aufgesetzt werden.

### Bezugszeichenliste

- 1 :: Roboterarm
- 3 :: Schweißkopf
- 7 :: erste Elektrode
- 9 :: zweite Elektrode
- 11:: Werktisch
- 13:: Kontaktleistengehäuse
- 15:: Metalleiter
- 17:: Metalleiter
- 19:: Abdeckung, Träger
- 19':: Isolierschicht
- 19'':: Isolierschicht
- 21:: Metalleiter, Leiterbahnen
- 22:: fensterartige Ausnehmung
- 23:: Indexstift
- B :: Bewegungsrichtung

## Patentansprüche

1. Verfahren zum elektrischen Verbinden von zwei übereinanderliegenden Metalleitern durch Verschweißen oder Verlöten, wobei einer der Metalleiter ein Kontaktelement eines Steckverbinders und der andere Metalleiter eine mit diesem Kontaktelement zu verbindende Anschlußleitung ist,
**gekennzeichnet** durch nachfolgende Verfahrensschritte:
- Auflegen des ersten Metalleiters (17) auf einen Werkstückträger,
- flächiges Auflegen des zweiten Metalleiters (21) auf den ersten Metalleiter (17) entlang ihrer Längsachsen,
- berührendes Aufsetzen von zwei axial zueinander beabstandeten und entgegengesetzt gepolten Elektroden (7, 9) auf die freie Oberfläche des zweiten Metalleiters (21) und
- Bestromung der beiden Elektroden (7, 9) zur Erzeugung einer dauerhaften mechanischen und elektrischen Verbindung der beiden Metalleiter (17, 21).

2. Verfahren nach Anspruch 1, dadurch gekennzeichnet, daß die beiden Elektroden (7, 9) mit einem Strom ausreichender Stromstärke bestromt werden, die zu einer Verschweißung der beiden Metalleiter (17, 21) führt.

3. Verfahren nach Anspruch 1, dadurch gekennzeichnet, daß mindestens einer der beiden Metalleiter (17, 21) mit einem Lötmaterial versehen ist, welches bei Bestromung der beiden Elektroden (7, 9) zu einer Verlötung der beiden Metalleiter (17, 21) führt.

4. Verfahren nach Anspruch 3, dadurch gekennzeichnet, daß beide Metalleiter (17, 21) mit einem Lötmaterial versehen sind.

5. Verfahren nach einem der Ansprüche 1 bis 4, dadurch gekennzeichnet, daß die Elektroden (7, 9) stabförmig abgebildet sind.

6. Verfahren nach einem der Ansprüche 1 bis 4, dadurch gekennzeichnet, daß die Elektroden (7, 9) kreisscheibenförmig oder ringförmig ausgebildet sind und orthogonal zur Längserstreckung der beiden Metalleiter (17, 21) über diese gerollt werden, wobei immer dann, wenn die beiden Elektroden (7, 9) den oberen Metalleiter (21) berühren, eine Bestromung erfolgt.

7. Verfahren nach einem der Ansprüche 1 bis 6, dadurch gekennzeichnet, daß die Bestromung der Elektroden (7, 9) im gepulsten Betrieb erfolgt.

8. Verfahren nach einem der Ansprüche 1 bis 7, dadurch gekennzeichnet, daß als Werkstückträger eine Wandung eines mindestens teilweise geöffneten Steckverbindergehäuses (13) vorgesehen ist, in welchem Kontaktelemente (15, 17) angeordnet sind, die mit ihren Anschlußteilen jeweils den ersten Metalleiter (17) bilden.

9. Verfahren nach Anspruch 8, dadurch gekennzeichnet, daß als zweite Metalleiter (21) Flachleiter oder Folienleiter verwendet werden.

10. Verfahren nach Anspruch 9, dadurch gekennzeichnet, daß der Flachleiter oder Folienleiter an seiner Verbindungsseite eine fensterartige Ausnehmung (22) aufweist, in welcher die Metalleiter (21) mindestens teilweise frei liegen.
